(19) Europäisches Patentamt / European Patent Office / Office européen des brevets

(11) **EP 2 840 103 A1**

(12) **EUROPEAN PATENT APPLICATION**
published in accordance with Art. 153(4) EPC

(43) Date of publication:
**25.02.2015 Bulletin 2015/09**

(21) Application number: **13778633.1**

(22) Date of filing: **11.04.2013**

(51) Int Cl.:
***C08G 65/10*** (2006.01)   ***C08G 65/336*** (2006.01)

(86) International application number:
**PCT/JP2013/060984**

(87) International publication number:
**WO 2013/157486 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.04.2012   JP 2012094727**

(71) Applicant: **Asahi Glass Company, Limited Tokyo 100-8405 (JP)**

(72) Inventors:
• **HAYASHI, Tomohiro Tokyo 100-8405 (JP)**
• **SUZUKI, Chitoshi Tokyo 100-8405 (JP)**
• **ARAI, Takeaki Tokyo 100-8405 (JP)**
• **TANAKA, Hideaki Tokyo 100-8405 (JP)**

(74) Representative: **Blodig, Wolfgang Wächtershäuser & Hartz Patentanwaltspartnerschaft mbB Weinstrasse 8 80333 München (DE)**

(54) **METHOD FOR PRODUCING POLYETHER**

(57)   To provide a method for producing a polyether having a weight average molecular weight of from 15,000 to 550,000.

The method for producing a polyether having a weight average molecular weight of from 15,000 to 550,000, comprises subjecting a cyclic monomer to a ring-opening addition reaction to an initiator having at least one active hydrogen atom per molecule in the presence of a double metal cyanide complex catalyst and an organic solvent, wherein the relative permittivity of the organic solvent is at most 18, and the amount of the organic solvent is from 6 to 300 parts by mass per 100 parts by mass in total of the initiator and the cyclic monomer.

EP 2 840 103 A1

**Description**

TECHNICAL FIELD

The present invention relates to a method for producing a polyether, particularly to a method for producing a polyether polyol.

BACKGROUND ART

Polyethers having hydroxyl groups obtainable by ring-opening addition of cyclic ethers to initiators, are widely used as raw materials for polyurethanes such as polyurethane foams or urethane prepolymers, raw materials for modified silicone polymers, surface active agents, lubricants and for other applications.

In the preparation of polyethers, it is common to use an alkali catalyst such as KOH, but it is thereby likely that by-products will be formed in an amount exceeding a certain level, and it is difficult to prepare a high molecular weight product having a molecular weight of more than 10,000. Therefore, a high molecular weight polyether is prepared by using a double metal cyanide complex catalyst (hereinafter sometimes referred to as a "DMC catalyst") whereby side-reactions are less likely to occur.

A polyether is usually prepared by a method wherein an initiator and a catalyst are charged into a reactor, and a cyclic ether as a monomer is supplied thereto and subjected to a ring-opening addition reaction.

In recent years, in order to improve the physical properties such as the strength and elongation of a polyurethane resin or a cured product of modified silicone polymer, a high molecular weight polyether, particularly a polyether having a molecular weight of at least 15,000, is required. However, usually as the molecular weight of a polyether increases, the viscosity increases. If the viscosity of the polyether increases, a problem such as inadequate mixing or deterioration in the processability is worried at the time of the production of the polyether or at the time of producing a product using the polyether as a raw material.

Heretofore, as a method for producing a polyether having a high molecular weight, a method of subjecting a cyclic ether to a ring-opening addition reaction to an initiator in the presence of an organic solvent, is disclosed.

Patent Document 1 discloses a method for producing a polyether polyol having a molecular weight of from 3,000 to 150,000 and a low total unsaturation degree, by subjecting a cyclic ether to a ring-opening addition reaction to an initiator by means of a glyme-type DMC catalyst in the presence of a solvent. However, polyether polyols disclosed in Examples are ones, of which the molecular weights are up to 5,000.

Patent Document 2 discloses a method for producing a polyether, characterized in that by means of a DMC catalyst, a reaction is carried out in the presence of an organic solvent in an amount of at most 5 parts by weight to the obtainable polyether. The molecular weight of the polyether disclosed in Patent Document 2 is about 10,000, and a polyether having a molecular weight of 15,000 or higher is not produced.

PRIOR ART DOCUMENTS

PATENT DOCUMENTS

Patent Document 1: U.S. Patent No. 3,829,505
Patent Document 2: Japanese Patent No. 2,946,580

DISCLOSURE OF INVENTION

TECHNICAL PROBLEM

Even if it was attempted to prepare a polyether with a molecular weight of at least 15,000 that was practically required in recent years, there was a problem such that the molecular weight did not increase depending upon the solvent, or even if the molecular weight increased, the viscosity also increased. On the other hand, Patent Document 2 has pointed out a problem that if an organic solvent is used in an amount exceeding 5 parts by weight, the viscosity tends to be high.

The present invention is to provide a method for producing a polyether, whereby a polyether having a high molecular weight can be prepared with a lower viscosity.

SOLUTION TO PROBLEM

The present invention provides a method for producing a polyether having a weight average molecular weight of from 15,000 to 550,000, which comprises subjecting a cyclic monomer which is a ring-opening addition reactive and of which at least a part is a 3- or 4-membered ring-form cyclic ether, to a ring-opening addition reaction to an initiator having at least one active hydrogen atom per molecule in the presence of a double metal cyanide complex catalyst and an organic solvent, wherein the relative permittivity of the organic solvent is at most 18, and the amount of the organic solvent is from 6 to 300 parts by mass per 100 parts by mass in total of the initiator and the cyclic monomer.

ADVANTAGEOUS EFFECTS OF INVENTION

According to the present invention, it is possible to produce a high molecular weight polyether having a molecular weight of at least 15,000 while preventing the viscosity from becoming high at the time of producing the polyether.
According to the present invention, it is possible to produce a high molecular weight urethane prepolymer or modified silicone polymer with a lower viscosity.

DESCRIPTION OF EMBODIMENTS

Now, embodiments of the present invention will be described.
In this specification, "a polyether" is a polymer which has many repeating units formed by ring-opening of a 3- or 4-membered ring-form cyclic ether and which has at least one hydroxy group. In this specification, "a cyclic ether" is a compound which has a 3- or 4-membered hetero ring constituted by carbon atoms and one oxygen atom. The ring-opening addition reaction of a cyclic ether is a reaction whereby the cyclic ether undergoes ring-opening by cleavage of the bond between its carbon atom and oxygen atom and adds to an active hydrogen-containing group such as a hydroxy group of an initiator, thereby to form a unit of the ring-opened cyclic ether (which has a hydroxy group at its terminal). Then, to the hydroxy group of the unit of the ring-opened cyclic ether, another cyclic ether undergoes ring-opening addition anew. As such a ring-opening addition reaction is sequentially repeated, polymerization proceeds to form a polymer (i.e. a polyether) having many units of the ring-opened cyclic ether.
In the present invention, "a ring-opening addition reactive cyclic monomer" also means a ring-opening addition reactive cyclic compound other than a cyclic ether. Specifically, it may, for example, be a cyclic ester, a cyclic polycarboxylic acid anhydride or a cyclic carbonate. Such a ring-opening addition reactive cyclic compound other than a cyclic ether, may be used together with a cyclic ether as the case requires, to produce a polyether. The unit to be formed by the ring-opening addition reaction of a ring-opening addition reactive cyclic compound other than a cyclic ether, may be a unit having an active hydrogen-containing group other than a hydroxy group (specifically such as a carboxy group).
The cyclic monomer to be used in the present invention is one, of which at least a part is a cyclic ether, preferably one, of which substantially whole is a cyclic ether.
In the following description, a cyclic monomer means one, of which at least a part is a cyclic ether.
Further, in this specification, repetition of a ring-opening addition reaction may be referred to simply as a ring-opening addition reaction or polymerization. Further, the number of hydroxy groups in a polyether is equal to the number of active hydrogen atoms per molecule of the initiator used for the production of the polyether. The number of active hydrogen atoms per an active hydrogen containing group varies depending of the type of the active hydrogen containing group, and in the case of a hydroxy group, the number of active hydrogen atoms is 1. In a case where the initiator has hydroxy groups as active hydrogen containing groups, the number of hydroxy groups in the initiator is equal to the number of hydroxy groups in a polyether obtainable from the initiator. In a case where a mixture of two or more initiators different in the number of hydroxy groups is used, the number of hydroxy groups in the obtainable polyether will be an average number of hydroxyl groups in the initiator mixture.
In this specification, a number average molecular weight (Mn), a mass average molecular weight (Mw) and a molecular weight distribution (Mw/Mn) are so-called molecular weights in terms of polystyrene, obtained by gel permeation chromatography using a polystyrene polymer as a reference. Further, a hydroxy value of a polyether in this specification was measured in accordance with JIS K1557 (2007 edition). An average molecular weight in terms of hydroxy value, of a polyether, is a value calculated by the following formula from the hydroxyl value (OHV, unit: mg KOH/g) and the average number x of hydroxy groups in the initiator used for the production of the polyether.

$$\text{Average molecular weight in terms of hydroxy value} = (56{,}100/\text{OHV}) \times (x)$$

<Double metal cyanide complex catalyst (DMC catalyst)>

As the DMC catalyst in the present invention, a known one may be used. Typically, it may be represented by the following formula (1).

$$M^1{}_a[M^2{}_b(CN)_c]_d e(M^3{}_f X_g)_h(H_2O)_i(L) \qquad (1)$$

In the formula (1), each of $M^1$ to $M^3$ is a metal, X is a halogen atom, L is an organic ligand, and each of a, b, c, d, e, f, g, h and i is a number which is variable depending upon e.g. the atomic valence of the metal or the coordination number of the organic ligand.

In the formula, $M^1$ or $M^3$ is at least one metal atom selected from the group consisting of Zn (II), Fe (II), Fe (III), Co (II), Ni (II), Mo (IV), Mo (VI), Al (III), V (V), Sr (II), W (IV), W (VI), Mn (II), Cr (III), Cu (II), Sn (II) and Pb (II), preferably Zn (II) or Fe (II). Here, the Roman numeral in brackets following a metal atom represents an atomic valence, and the same applies hereinafter. $M^1$ and $M^3$ in one molecule may be the same or different from each other. They are preferably the same.

$M^2$ is at least one metal atom selected from the group consisting of Fe (II), Fe (III), Co (II), Co (III), Cr (II), Cr (III), Mn (II), Mn (III), Ni (II), V (IV) and V (V), preferably Co (III) or Fe (III). X is a halogen atom. L is an organic ligand.

As the organic ligand, an alcohol, an ether, a ketone, an ester, an amine, an amide, etc. may, for example, be used, and an alcohol is preferred. A preferred organic ligand is water-soluble, and as a specific example, it is at least one compound selected from the group consisting of tert-butyl alcohol, n-butyl alcohol, iso-butyl alcohol, tert-pentyl alcohol, iso-pentyl alcohol, N,N-dimethylacetamide, ethylene glycol dimethyl ether (also called glyme), diethylene glycol dimethyl ether (also called diglyme), triethylene glycol dimethyl ether (also called triglyme), ethylene glycol mono-tert-butyl ether, iso-propyl alcohol and a dioxane. The dioxane may be 1,4-dioxane or 1,3-dioxane, preferably 1,4-dioxane.

A particularly preferred organic ligand is tert-butyl alcohol, tert-pentyl alcohol, ethylene glycol mono-tert-butyl ether, or a combination of tert-butyl alcohol and ethylene glycol mono-tert-butyl ether. When such an organic ligand is used, a particularly high polymerization activity is obtainable, and such use is preferred with a view to narrowing the molecular weight distribution of the polyether.

As the DMC catalyst in the present invention, particularly preferred from the viewpoint of the catalytic activities is one wherein the organic ligand L is tert-butyl alcohol, or one wherein L is ethylene glycol mono-tert-butyl ether.

Particularly, one wherein in the formula (1), $M^1$ and $M^3$ are the same and Zn (II) or Fe (II), $M^2$ is Co (III) or Fe (III), X is halogen, and L is tert-butyl alcohol or ethylene glycol mono-tert-butyl ether, is preferred, and one wherein $M^1$ and $M^3$ are Zn (II), $M^2$ is Co (III), X is potassium, and L is tert-butyl alcohol, is especially preferred, in that it is thereby possible to reduce by-products.

The method for producing a DMC catalyst is not particularly limited, and a known method may be optionally used. For example, (i) a method wherein an organic ligand is coordinated to a reaction product obtained by reacting a halogenated metal salt, and cyanometalate acid and/or an alkali metal cyanometalate in an aqueous solution, then the formed solid component is separated, and the separated solid component is further washed with an organic ligand aqueous solution, to obtain a cake (solid component), or (ii) a method wherein a halogenated metal salt, and cyanometalate acid and/or an alkali metal cyanometalate, are reacted, the obtained reaction product (solid component) is separated, the separated solid component is further washed with an organic ligand aqueous solution, to obtain a cake (solid component), may be mentioned, and the cake obtained by the method (i) or (ii) is subjected to filtration separation and further dried.

The metal constituting a cyanometalate in the above alkali metal cyanometalate to be used for the production of a DMC catalyst, corresponds to $M^2$ in the above formula (1). The cyanometalate acid or the alkali metal cyanometalate to be used for the production of a DMC catalyst in the present invention, is preferably $H_3[Co(CN)_6]$, $Na_3[Co(CN)_6]$ or $K_3[Co(CN)_6]$, particularly preferably $Na_3[Co(CN)_6]$ or $K_3[Co(CN)_6]$.

In the present invention, the amount of the DMC catalyst is set to be at least the required amount depending upon the desired molecular weight of a polyether to be produced. On the other hand, it is preferred that the amount of the DMC catalyst to be used is made to be as small as possible so as to minimize the DMC catalyst remaining in the obtainable polyether and the metal compound to be derived from the DMC catalyst. It is thereby possible to reduce the influence of the remaining DMC catalyst to the reaction rate of the polyether and a polyisocyanate compound, or to the physical properties of a polyurethane product or a functional lubricant prepared by using the polyether as a raw material.

It is usual that after polymerizing a cyclic monomer to an initiator, an operation to remove the DMC catalyst from the obtained polyether is carried out. However, in a case where the amount of the DMC catalyst remaining in the polyether is so little that there will be no adverse effect to the subsequent reaction with a polyisocyanate compound or to the properties of a final product, it is possible to proceed to the next step by using the polyether without removing the DMC catalyst, whereby the production efficiency of the polyether can be increased.

Specifically, the total amount of metals (such as Zn, Co, etc.) derived from the DMC catalyst, which are contained in the polyether upon completion of the polymerization reaction, is preferably from 1 to 30 ppm, particularly preferably at most 10 ppm, per 100 parts by mass of the polyether. When the total amount of metals derived from the DMC catalyst is at most 30 ppm, it is more likely to be unnecessary to remove the remaining catalyst from the obtained polyether.

Further, as the case requires, it is possible to carry out treatment to remove the DMC catalyst from the obtained polyether, and/or treatment to deactivate the DMC catalyst. The method may, for example, be an adsorption method using an adsorbent selected from e.g. a synthetic silicate (such as magnesium silicate or aluminum silicate), an ion exchange resin and activated earth, a neutralization method using an amine, an alkali metal hydroxide, an organic acid or a mineral acid, or a method of using the neutralization method and the adsorption method in combination.

<Polyether>

In the present invention, the polyether may specifically be a polyether polyol, a polyether monol, a polyester ether polyol, a polyester ether monol, a polyether carbonate polyol or a polyether carbonate monol.

In the present invention, a polyester ether polyol or a polyester ether monol (hereinafter sometimes referred to as a polyester ether poly(mono)ol) is obtainable by copolymerizing the after-described cyclic ether and the after-described cyclic ester (or cyclic polycarboxylic acid anhydride) to an initiator having active hydrogen atom(s) in the presence of a DMC catalyst. The cyclic ether and the cyclic ester may be subjected to random polymerization or block polymerization. The cyclic ether and the cyclic polycarboxylic acid anhydride will undergo alternating copolymerization.

A polyether carbonate polyol or a polyether carbonate monol is obtainable by copolymerizing a cyclic ether and a cyclic carbonate to an initiator having active hydrogen atom(s) in the presence of a DMC catalyst.

A polyester ether poly(mono)ol is obtainable by alternately subjecting a cyclic ether and a cyclic polycarboxylic acid anhydride to an esterification reaction. In order to obtain an ether having a hydroxy group at its terminal, the cyclic ether is used in a proportion of at least 50 mol% to the total amount of the cyclic polycarboxylic acid anhydride and the cyclic ether. However, the polyether may partly have a polyester chain, and therefore, as a part of the cyclic monomer to be reacted, an equimolar mixture of the cyclic polycarboxylic acid anhydride and the cyclic ether is used.

The weight average molecular weight of the polyether of the present invention is from 15,000 to 550,000, preferably from 15,000 to 500,000, more preferably from 20,000 to 300,000.

When it is at least 15,000, an effect for improving the physical properties such as strength, elongation, etc. is obtainable, such being desirable. When it is at most 550,000, the viscosity in use can be suppressed to be low, such being desirable.

Further, the molecular weight distribution (Mw/Mn) of the polyether of the present invention is preferably from 1.01 to 1.60, more preferably from 1.02 to 1.40. Within such a molecular weight distribution range, a polyol having a low viscosity is obtainable in the case of the same weight average molecular weight.

The hydroxy value of a polyether obtainable by the method of the present invention is preferably at most 10 mgKOH/g, more preferably at most 9 mgKOH/g, particularly preferably at most 8 mgKOH/g. The lower limit value is preferably 0.16 mgKOH/g in order to suppress the viscosity of the polyether to be low.

<Initiator>

The initiator in the present invention is a compound having at least one active hydrogen atom in one molecule. As the compound having active hydrogen atom(s), a compound having hydroxy group(s) is preferred, in that it does not impair the activities of a DMC catalyst, and more specifically, a compound having from 1 to 12 hydroxy groups and a number average molecular weight (Mn) of from 18 to 30,000, is preferred. When the initiator has one hydroxy group, a polyether having one hydroxy group is obtainable, such as a polyether monol, a polyester ether monol or a polyether carbonate monol. When the initiator has two or more hydroxy groups, a polyether having two or more hydroxy groups is obtainable, such as a polyether polyol, a polyester ether polyol or a polyether carbonate polyol.

Specific examples of the initiator include water; a monohydric alcohol such as methanol, ethanol, 2-propanol, n-butanol, iso-butanol, 2-ethylhexanol, decyl alcohol, lauryl alcohol, tridecanol, cetyl alcohol, stearyl alcohol or oleyl alcohol, a dihydric alcohol such as ethylene glycol, diethylene glycol, propylene glycol, dipropylene glycol, 1,3-propane diol, 1,4-cyclohexane diol, 1,3-butane diol, 1,4-butane diol, 1,6-hexane diol or 1,4-cyclohexane diol; a trihydric or higher polyhydric alcohol such as glycerine, diglycerine, trimethylolpropane, pentaerythritol, dipentaerythritol or tripentaerythritol; a saccharide such as glucose, sorbitol, dextrose, fructose, sucrose or methylglucoside, or its derivatives; a phenol such as bisphenol A, bisphenol F, bisphenol S, novolac, resol or resorcin; etc. One of these compounds may be used alone, or two or more of them may be used in combination.

Further, a polyol selected from e.g. a polyether poly(mono)ol; a polycarbonate poly(mono)ol; a polyester poly(mono)ol; and a polyoxytetramethylene glycol, obtainable by polymerizing an alkylene oxide to such a compound by a known method, may also be used as an initiator. Such a polyol preferably has a number average molecular weight (Mn) of from 1,000 to 30,000 and preferably has from 1 to 12 hydroxy groups per molecule. Further, the hydroxy value of such a compound is preferably at most 187 mgKOH/g. Furthermore, the hydroxyl value of such a compound is preferably higher by at least 5 mgKOH/g, particularly preferably higher by at least 6 mgKOH/g, than the hydroxy value of the desired polyether.

The number average molecular weight (Mn) of the initiator is preferably from 18 to 30,000, more preferably from 300 to 20,000, particularly preferably from 600 to 15,000. By using an initiator having a number average molecular weight (Mn) of at least 300, it is possible to shorten the time till the initiation of the above-mentioned polymerization reaction or copolymerization reaction in the presence of a DMC catalyst.

The weight average molecular weight (Mw) of the initiator is preferably from 18 to 20,000, more preferably from 300 to 15,000, particularly preferably from 600 to 10,000. The value of weight average molecular weight (Mw)/number average molecular weight (Mn) representing the molecular weight distribution of the initiator is preferably within a range of from 1.0 to 2.0.

When an initiator having a number average molecular weight (Mn) of at most 30,000 is used, at the time of charging the initiator into a reactor, the viscosity will not be too high, such being desirable. Here, in a case where the initiator is composed solely of molecules having the same molecular weight, such as a low molecular weight alcohol as an initiator, the molecular weight obtainable from the chemical formula is taken as the number average molecular weight (Mn). The number average molecular weight (Mn) of an initiator is lower than the number average molecular weight (Mn) of a polyether obtainable by using it. The difference between the number average molecular weight of the initiator and the number average molecular weight of the polyether obtainable by using it (i.e. the amount of units having a cyclic monomer ring-opened) is preferably at least 5,000, particularly preferably at least 10,000. When the difference in the number average molecular weight is at least 5,000, the polymerization amount in the presence of a DMC catalyst increases, whereby a merit of polymerization in the presence of a DMC catalyst is readily obtainable.

Further, in the present invention, even if the amount of an initiator is small, since it is reacted together with an organic solvent, an apparent mass increases, whereby a cooling device or a stirring device in a stirrer will be less restricted. Therefore, even in a case where the difference in the number average molecular weight between the initiator and the polyether is large, the production is feasible as compared with a case where no organic solvent is used.

The number of hydroxy groups in the initiator is preferably from 1 to 12, more preferably from 1 to 8, particularly preferably from 1 to 4. When an initiator having the number of hydroxy groups being at most the upper limit value within such a range, is used, the molecular weight distribution of the obtainable polyether tends to be narrow. In a case where two or more compounds are used in combination as the initiator, the average number of hydroxy groups per one molecule is preferably from 1 to 12, more preferably from 1 to 8, particularly preferably from 1 to 4. Further, in a case where the obtainable polyether is to be used as a raw material for a modified silicone or a resin such as polyurethane, the number of hydroxy groups in the polyether is preferably from 2 to 8, particularly preferably from 2 to 6. Accordingly, as an initiator for producing such a polyether, an initiator having the number of hydroxy groups being from 2 to 8, particularly from 2 to 6, is preferred. In a case where two or more initiators are used in combination, the average number of hydroxy groups in the initiators, is preferably from 1.5 to 8, particularly preferably from 1.8 to 6. The number of hydroxy groups in a particularly preferred polyether is from 1.8 to 3.

[Cyclic monomer]

(Cyclic ether)

In the present invention, the cyclic ether to be subjected to a ring-opening addition reaction is a 3- or 4-membered ring-form cyclic ether and a compound having an epoxy ring or an oxetane ring. In this specification, a 3- or 4-membered ring-form cyclic ether is referred to simply as "a cyclic ether" unless otherwise specified.

In a cyclic ether, a ring-opening addition reactive ring per molecule is 1. As such a cyclic ether, a compound having an epoxy group is preferred.

The cyclic ether is preferably an alkylene oxide. As a compound having one epoxy ring other than an alkylene oxide, a halogen-containing alkylene oxide, a cycloalkene oxide such as cyclopentene oxide or cyclohexene oxide, an aryl-substituted alkylene oxide such as styrene oxide, or a glycidyl compound such as a glycidyl alkyl ether or a glycidyl alkyl ester may, for example, be mentioned.

As the cyclic ether, an alkylene oxide is preferred, and a $C_{2-20}$ alkylene oxide is particularly preferred. The alkylene oxide to be used in the present invention may, for example, be ethylene oxide, propylene oxide, 1,2-butylene oxide, 2,3-butylene oxide, styrene oxide or a $C_{5-20}$ $\alpha$-olefin oxide, and one or more selected from the group consisting of these alkylene oxides may be used.

Here, in a case where two or more alkylene oxides are to be used, polymerization of such alkylene oxides may be random polymerization, block polymerization, or a combination of random and block polymerizations. That is, a mixture of two or more alkylene oxides may be polymerized, or two or more alkylene oxides may be separately and sequentially polymerized, or these polymerization methods may be used in combination.

Further, the types of the cyclic ethers to be used in the after-described initial step (a) and polymerization step (b) may be different. Here, the types of the cyclic ethers are meant not only for the types of the cyclic ethers themselves, but also for cyclic ethers different in their blend ratio in the case of a mixture of two or more cyclic ethers.

Among these alkylene oxides, a $C_{2-4}$ alkylene oxide i.e. ethylene oxide, propylene oxide, 1,2-butylene oxide or 2,3-butylene oxide is preferred, and a $C_{2 \text{ or } 3}$ alkylene oxide i.e. ethylene oxide or propylene oxide is particularly preferred.

The cyclic ether may be decided depending upon the desired physical properties of a final product to be prepared by using a polyether as a raw material. However, in a case where an adhesive, sealing agent or the like is to be prepared, it is preferred to use propylene oxide only, from the viewpoint of water resistance, etc.

A cyclic ether may be used in combination with another cyclic monomer to produce the above-mentioned polyester ether polyol, polyester ether monol, polyether carbonate polyol or polyether carbonate monol. By using a cyclic ester or a cyclic carboxylic acid anhydride in combination with a cyclic ether, a polyester ether polyol or polyester ether monol may be prepared, and by using a cyclic carbonate in combination with a cyclic ether, a polyether carbonate polyol or polyether carbonate monol may be prepared.

The cyclic monomer to be used in the after-described initial step (a) and polymerization step (b) may be a cyclic ether only, or a combined use of a cyclic ether and a cyclic monomer other than the cyclic ether. Further, the cyclic monomers to be used in the initial step (a) and the polymerization step (b) may be different from each other.

(Cyclic ester)

The cyclic ester may be a $C_{3-9}$ cyclic ester so-called a lactone. As the cyclic ester, it is possible to use one or more members selected from the group consisting of β-propiolactone, δ-valerolactone, ε-caprolactone, methyl-ε-caprolactone, α-methyl-β-propiolactone, β-methyl-β-propiolactone, methoxy-ε-caprolactone, and ethoxy-ε-caprolactone.

δ-valerolactone or ε-caprolactone is preferred, and ε-caprolactone is particularly preferred. In a case where a cyclic ether and a cyclic ester are used in combination, the proportion of the cyclic ether in the total amount of the cyclic ether and the cyclic ester to be used in the initial step (a) and polymerization step (b) is preferably at least 50 mol%, more preferably at least 70 mol%.

(Cyclic polycarboxylic acid anhydride)

As the cyclic polycarboxylic acid anhydride, a cyclic dicarboxylic acid anhydride is preferred. Specifically the following compounds may be mentioned. An aliphatic dicarboxylic acid anhydride such as maleic anhydride, succinic anhydride, dodecenyl succinic anhydride or octadecenyl succinic anhydride; an aromatic dicarboxylic acid anhydride such as phthalic anhydride; and an alicyclic dicarboxylic acid anhydride such as hexahydrophthalic anhydride, tetrahydrophthalic anhydride, 3-methyl-hexahydrophthalic anhydride, 4-methyl-hexahydrophthalic anhydride, 3-methyl-1,2,3,6-tetrahydrophthalic anhydride, or 4-methyl-1,2,3,6-tetrahydrophthalic anhydride. Maleic anhydride, phthalic anhydride or tetrahydrophthalic anhydride is preferred, and phthalic anhydride or tetrahydrophthalic anhydride is particularly preferred.

The cyclic polycarboxylic acid anhydride does not undergo a ring-opening addition reaction by itself and is alternately polymerized with a cyclic ether to form a polyester chain. Therefore, the cyclic polycarboxylic acid anhydride is used as mixed with a cyclic ether in an amount of at least equimolar thereto, and such a mixture is used as the cyclic monomer. In such a case, the cyclic ether in an amount exceeding the equimolar to the cyclic polycarboxylic acid anhydride is polymerized by itself to form an ether bond. In a case where a cyclic ether and a cyclic polycarboxylic acid anhydride are used in combination, the proportion of the cyclic ether in the total amount of the cyclic ether and the cyclic polycarboxylic acid anhydride to be used in the initial step (a) and polymerization step (b) is an amount exceeding 50 mol%, preferably at least 60 mol%, particularly preferably at least 70 mol%.

(Cyclic carbonate)

The cyclic carbonate may, for example, be ethylene carbonate or propylene carbonate. The alkylene oxide to be used for producing a polyether polycarbonate polyol or a polyether polycarbonate monol, is preferably propylene oxide, 1,2-butylene oxide or 2,3-butylene oxide. In a case where a cyclic ether and a cyclic carbonate are used in combination, the proportion of the cyclic ether in the total amount of the cyclic ether and the cyclic carbonate to be used in the initial step (a) and polymerization step (b) is preferably at least 50 mol%, more preferably at least 70 mol%.

<Organic solvent>

In the present invention, as the organic solvent, one having a relative permittivity of at most 18 is used, and it is preferred to use a solvent having a relative permittivity of from 1 to 8. When the relative permittivity is at most 18, it is possible to produce a polyether having a high molecular weight. The lower limit value for the relative permittivity is not particularly limited, but usually one being at least 1 is known. Within such a relative permittivity range, the solvent will not deactivate the DMC catalyst and will not impair the ring-opening addition reaction of a cyclic monomer, whereby it is considered possible to produce a preferred polyether.

In the present invention, the amount of the organic solvent to be used, is represented by a mass ratio to 100 parts by mass in total of the initiator and the cyclic monomer. The total mass of the initiator and the cyclic monomer is equal to the entire mass of the polyether to be produced, and accordingly, such a mass ratio is the same as the mass ratio to 100 parts by mass of the polyether to be produced.

Specific examples of the organic solvent and its relative permittivity (shown by a numeral in brackets) include hexane (1.8799), octane (1.948), 1,4-dioxane (2.209), carbon tetrachloride (2.229), toluene (2.3807), diethyl ether (4.197), ethyl acetate (6.02), acetic acid (6.17), tetrahydrofuran (7.58), dichloromethane (8.93), cyclohexanol (15) and 1-butanol (17.51).

Among them, hexane, toluene or tetrahydrofuran is preferred from the viewpoint of the suitable properties as a solvent not reactive with an initiator or a cyclic monomer, the odor, the environmental load and the boiling point. Further, in a case where without removing an organic solvent, a polyether is used as a raw material for a product such as a urethane prepolymer or a modified silicone polymer, it is preferred to use the organic solvent to be used for the product also in the production of the polyether.

With respect to the relative permittivity, the numerical values may be confirmed by Kagaku Binran (Handbook of Chemistry), Kisohen, 5th edition, compiled by the Chemical Society of Japan, 1-770 to 777.

The amount of the organic solvent to be used is preferably from 6 to 300 parts by mass, more preferably from 6 to 100 parts by mass, further preferably from 7 to 100 parts by mass, particularly preferably from 7 to 80 parts by mass, most preferably from 7 to 60 parts by mass, per 100 parts by mass in total of the initiator and the cyclic monomer. At least 6 parts by mass is preferred in that it is thereby possible to produce a polyether having a low viscosity. Further, at most 300 parts by mass is preferred in that it is thereby easy to produce a polyether having a very high molecular weight. Further, at most 100 parts by mass is preferred from the viewpoint of the yield of a polyether.

After completion of the ring-opening addition reaction, the organic solvent can be removed by e.g. reduced pressure deaeration, but may not be removed or may be retained in a necessary amount. By retaining the organic solvent for the polyether, when used as a raw material for a urethane prepolymer or a modified silicone polymer, the viscosity is maintained to be low whereby the handling efficiency will be good, and further, the organic solvent may be used as it is, as a raw material for the production of such a product.

In a case where the organic solvent is to be removed sufficiently, the amount of the organic solvent to be used is preferably set to be from 6 to 60 parts by mass per 100 parts by mass in total of the initiator and the cyclic monomer.

<Method for producing polyether>

Now, a method for producing a polyether by using an initiator and a cyclic ether as raw materials, will be described. The same method may be used also in the case of producing a polyether by using, instead of a cyclic ether, a cyclic ether and a cyclic monomer other than the cyclic ether.

A preferred method for producing a polyether of the present invention is a method which comprises an initial step (a) of supplying and reacting a part of a cyclic ether to be subjected to a ring-opening addition reaction to an initiator (hereinafter sometimes referred to as a cyclic ether for the initial step), to a reaction liquid containing an initiator and a DMC catalyst, in an amount of from 5 to 20 parts by mass per 100 parts by mass of the initiator contained in the reaction liquid, and a polymerization step (b) of additionally supplying the rest of the cyclic ether for a polymerization reaction after the initial step (a). The organic solvent may be introduced at any stage in the process for the production of the polyether.

If necessary, the organic solvent may be introduced to the reactor before the initial step, followed by deaeration for dehydration.

This method is preferably conducted by a batch system, but may be a continuous method. Specifically, it may be conducted as follows.

A mixing means in the initial step (a) of the method of the present invention is not particularly limited so long as it is a means capable of sufficiently mixing the DMC catalyst and the initiator (including components to be added as the case requires). As the mixing means, a stirring means is usually used. The stirring powder of the stirring means is preferably from 4 to 500 kW/m$^3$, more preferably from 8 to 500 kW/m$^3$, particularly preferably from 12 to 500 kW/m$^3$. Here, the stirring power is a value to be calculated from known values, and this value is a required power per unit liquid amount of the content, which is calculated from e.g. the volume and viscosity of the content in the pressure-resistant reactor, the shape of the reactor, the shape and rotational speed of the stirring vanes, etc. In the present invention, the above reaction liquid corresponds to the content in the pressure-resistant reactor.

The stirring means in the initial step (a) in the method of the present invention may specifically be stirring vanes, bubbling by an inert gas such as nitrogen gas, or stirring by electromagnetic waves, ultrasonic waves, etc., but stirring by stirring vanes is preferred. As a preferred example of stirring vanes, stirring vanes disclosed in JP-A-2003-342361 may be mentioned. As stirring vanes, large-size stirring vanes are particularly preferred, and for example, large-size vanes such as FULLZONE (registered trademark) vanes, manufactured by Kobelco Pantech, or MAXBLEND (registered trademark) vanes, manufactured by Sumitomo Heavy Industries, Ltd., may be used. Further, paddle vanes, pitched paddle vanes, turbine vanes and propeller vanes may also be used. At that time, the radius of stirring vanes to the inside diameter (inside radius) of the pressure-resistant reactor is preferably from 20 to 99%, more preferably from 30 to 90%, particularly preferably from 40 to 80%.

The shape and material of the pressure-resistant reactor to be used in the initial step (a) of the present invention are not particularly limited, but the material is preferably heat-resistant glass, or a metal container is preferred.

As a means to supply an ether into the reactor, a cyclic ether-supplying means may be provided to eject the cyclic ether at two or more portions into the liquid.

Then, the interior of the pressure-resistant reactor is preferably replaced with nitrogen, whereby oxygen in the reaction liquid will be removed. The amount of oxygen in the reaction liquid is preferably at most 1 mass% to the amount of nitrogen. The pressure in the pressure-resistant reactor in the initial step (a) of the present invention is preferably at most 0.020 MPa by absolute pressure. It is more preferably at most 0.015 MPa by absolute pressure, particularly preferably at most 0.010 MPa by absolute pressure. If it exceeds 0.020 MPa by absolute pressure, the pressure rise becomes vigorous along with the decrease in the space volume in the pressure-resistant reactor along with the polymerization, such being undesirable. Here, exhaust ventilation of the pressure-resistant reactor may not be effective to improve the activities of the catalyst, but may be carried out, if required, in a case where moisture of the initiator is too much.

Then, the reaction liquid is heated with stirring, and in such a state that the temperature of the reaction liquid is at a predetermined initial temperature, a cyclic ether for the initial step is supplied and reacted. In this specification, the initial temperature is meant for the temperature of the reaction liquid at the time of initiation of supplying the cyclic ether for the initial step. The initial temperature of the reaction liquid is from 120 to 165°C, preferably from 125 to 150°C, particularly preferably from 130 to 140°C. When the initial temperature is at least the lower limit value within such a range, the catalytic activities will be distinctly good, and when it is at most the upper limit value within such a range, there will be no trouble of thermal decomposition of components themselves contained in the reaction liquid.

Specifically, it is preferred that the reaction liquid is heated with stirring to the initial temperature, and the supply of a cyclic ether is initiated in such a state that the temperature of the reaction liquid is maintained. For example, when the reaction liquid has reached the predetermined initial temperature, heating is stopped, and the supply of a cyclic ether is initiated before the temperature of the reaction liquid starts to lower. The period of time from stopping the heating to initiating the supply of a cyclic ether is not particularly limited, but from the viewpoint of efficiency, it is preferably within 1 hour. The temperature raising time to heat the reaction liquid to the predetermined temperature is preferably from 10 minutes to 24 hours, particularly preferably from 15 minutes to 2 hours. When the temperature raising time is at least the lower limit value within such a range, the reaction liquid can be heated uniformly, and when it is at most the upper limit value within such a range, timewise efficiency is good.

The cyclic ether for the initial step is a cyclic ether to be polymerized to the initiator in the production of a polyether. If the amount of the cyclic ether to be supplied for the initial step is too small, activation of the DMC catalyst tends to be inadequate, and if it is too large, a runaway reaction is likely to occur. Therefore, it is adjusted to be from 5 to 20 parts by mass, preferably from 8 to 15 parts by mass, particularly preferably from 10 to 12 parts by mass, per 100 parts by mass of the initiator contained in the reaction liquid.

The supply of the cyclic ether for the initial step is conducted in such a state that the pressure-resistant reactor is sealed. Once the cyclic ether is supplied to the reaction liquid, the internal pressure of the pressure-resistant reactor rises immediately thereafter along with vaporization of the non-reacted cyclic ether. Then, as the DMC catalyst is initially activated, a reaction of the cyclic ether and the initiator takes place, whereby the internal pressure of the pressure-resistant reactor starts to decrease and at the same time, by the reaction heat, the temperature of the reaction liquid rises. Upon completion of the reaction of the entire amount of the supplied cyclic ether, the internal pressure of the pressure-resistant reactor decreases to the same level as before the supply, and the temperature rise by the reaction heat ceases. Depending upon the amount of the solvent, no substantial rise in temperature due to the reaction heat may be observed, and a rise of the internal pressure may be observed. In this specification, the initial step (a) means a step from the initiation of the supply of a cyclic ether for the initial step to the completion of the reaction of the cyclic ether. The completion of the reaction of the cyclic ether for the initial step can be confirmed by a decrease in the internal pressure of the pressure-resistant reactor. That is, the completion of the initial step (a) means a point of time when the internal pressure of the pressure-resistant reactor has decreased to the same level as before the supply of the cyclic ether. The initial step is preferably from 10 minutes to 24 hours, particularly preferably from 15 minutes to 3 hours. When it is at least the lower limit value within such a range, it is possible to activate the DMC catalyst, and when it is at most the upper limit value within such a range, timewise efficiency is good.

Polymerization step (b)

After the completion of the initial step, a cyclic ether is supplied afresh to the reaction system, and at the same time, the temperature of the reaction liquid is adjusted to a predetermined polymerization temperature, whereupon a polymerization reaction is carried out with stirring to obtain a desired polyether.

As a heat-resistant reactor to be used for the polymerization step (b) in the method of the present invention, a pressure-resistant autoclave is preferably used, but in a case where the boiling points of the cyclic ether, organic solvent, etc. are high, the reactor may not be highly pressure-resistant. Its material is not particularly limited. Further, as the reactor, one used in the above initial step (a) may be used as it is.

In the polymerization step (b) in the method of the present invention, during the reaction of the cyclic ether and the product of the initial step (a) (the compound having a cyclic ether reacted to an initiator), it is preferred to stir the reaction liquid with a stirring power of preferably from 4 to 500 $kW/m^3$, more preferably from 8 to 500 $kW/m^3$, particularly preferably from 12 to 500 $kW/m^3$, in the same manner as in the above initial step (a). As the stirring vanes, propeller vanes, paddle vanes, Maxblend impellers or disk turbine impellers may, for example, be used, and large-size vanes are preferred in order to uniformly stir the interior of the reactor. As other means, a disper, a homomixer, a colloid mill, Nauta Mixer, etc. may also be used. Further, instead of stirring vanes, mixing by ultrasonic waves may be employed. These stirring methods may be used in combination. In a case where a stirring method using common stirring vanes is to be employed, it is preferred to set the rotational speed of the stirring vanes as high as possible within a range where the stirring efficiency will not be impaired by inclusion into the reaction liquid, of a large amount of a gas in a gas phase in the reactor.

As the polymerization method in the polymerization step (b) in the present invention, a batch method is preferred, but a continuous method may otherwise be employed wherein addition of a mixture comprising the cyclic ether, the product of the above-described initial step (a) and the DMC catalyst and withdrawal of a polyether as the product in the polymerization step (b) are carried out simultaneously. Particularly at the time of using an organic solvent, it is preferred to use a continuous method, since the entire system can be made to have a low viscosity whereby in a case where the number average molecular weight per one hydroxyl group in the initiator is from 500 to 10,000, the productivity will be high.

In the polymerization step (b), the temperature (polymerization temperature) of the reaction liquid at the time of reacting the cyclic ether is preferably from 125 to 180°C, particularly preferably from 125 to 160°C. When the polymerization temperature is at least the lower limit value within such a range, a good reaction rate is obtainable, and it is possible to reduce the remaining amount of a non-reacted material in the final product. Further, when it is at most the upper limit value within such a range, high activities of the DMC catalyst can be well maintained, and it is possible to make the molecular weight distribution small. It is preferred that after the completion of the reaction of the cyclic ether in the polymerization step (b), the reaction liquid is cooled, and purification of the reaction product is carried out.

The supply rate of the cyclic ether in the polymerization step (b) is adjusted to be preferably as slow as possible since it is thereby possible to make the molecular weight distribution of the obtainable polymer small. However, the production efficiency thereby decreases, and therefore, it is advisable to set the supply rate by comparing such situations. As a specific supply rate, from 1 to 200 mass%/hr is preferred, to the entire mass of the polyether expected as the final product. Further, the supply rate may sequentially be changed during the polymerization reaction.

The reaction time in the polymerization step (b) of the present invention is preferably from 10 minutes to 40 hours, particularly preferably from 30 minutes to 24 hours. When the reaction time is at least the lower limit value within such a range, control of the reaction is possible, while at most the upper limit value within such a range, is preferred from the viewpoint of efficiency.

The pressure in the pressure-resistant reactor in the polymerization step (b) in the present invention is preferably at most 1 MPa, particularly preferably at most 0.8 MPa, by absolute pressure, in that the operation and installation are thereby easy.

To the polyether obtained by the polymerization using the DMC catalyst as described above, a cyclic ether may further be subjected to a ring-opening addition reaction by means of a polymerization catalyst other than a DMC catalyst, to obtain a final polyether. Such a ring-opening addition reaction may be conducted by a conventional method using suitably an alkali metal catalyst such as potassium hydroxide as the polymerization catalyst.

As the case requires, the polyether obtained by the method of the present invention may be subjected to treatment for removing the DMC catalyst or treatment for deactivating the DMC catalyst. As such a treatment method, it is possible to use, for example, an adsorption method using an adsorbent selected from a synthetic silicate (such as magnesium silicate or aluminum silicate), an ion exchange resin, activated earth, etc., a neutralization method using an amine, an alkali metal hydroxide, phosphoric acid, an organic acid such as lactic acid, succinic acid, adipic acid or acetic acid, or a salt thereof, or an inorganic acid such as sulfuric acid, nitric acid or hydrochloric acid, or a combination of the neutralization method and the adsorption method. Also in a case where the above-mentioned alkali metal catalyst is used for conversion to a primary hydroxy group, the alkali metal catalyst may likewise be deactivated and removed.

To the polyether thus obtained, a stabilizing agent may be added as the case requires, to prevent deterioration during the storage for a long period of time. Such a stabilizing agent may, for example, be a hindered phenol type antioxidant such as BHT (dibutylhydroxyltoluene).

<Applications>

The polyether obtainable by the method of the present invention may be made into various polyurethane products by reacting it with a polyisocyanate compound and optionally with a chain extender. As mentioned above, the number of hydroxy groups in a polyether to be used as a raw material for a polyurethane is preferably from 2 to 8. The polyether obtainable by the method of the present invention may be used as a polyol for a flexible polyurethane foam. In the production of a flexible polyurethane foam, especially when the polyol has a high molecular weight and a small molecular weight distribution, good foam appearance, physical properties and vibration characteristics are obtainable.

Further, the polyether according to the present invention is useful as a functional lubricant such as base oil for grease, compressor oil, rolling oil, gear oil, metal processing oil, traction drive oil, engine oil or drilling oil; or as a surfactant. In these applications, especially when the polyether has a high molecular weight and a small molecular weight distribution, improvements in lubricity, detergent properties and useful life can be expected.

The polyether obtainable by the method of the present invention is useful also as a raw material for a modified silicone polymer. Further, it may be reacted with a polyisocyanate to form a urethane prepolymer. The modified silicone polymer and urethane prepolymer may be produced by methods which will be described later. The modified silicone polymer and urethane prepolymer can be suitably used as a hardening component of a hardenable composition for a sealing material. In the hardenable composition for a sealing material, when the modified silicone polymer and urethane prepolymer constituting the hardening component have a high molecular weight and a small molecular weight distribution, hardenability will be good including the inside of the sealing material, and further, the viscosity will be low, whereby working efficiency will also be improved. Furthermore, the molecular weight will be uniform, whereby the mechanical properties and durability after the hardening will be excellent.

<Modified silicone polymer>

The modified silicone polymer of the present invention is one having such a construction that a hydrolysable silyl group represented by the following formula (1) is introduced at a terminal of a polyether via a connecting group.

$$-SiX_aR^1{}_{3-a} \qquad (1)$$

In the formula (1), $R^1$ is a $C_{1-20}$ substituted or unsubstituted monovalent organic group, X is a hydroxy group or a hydrolysable group, and a is 1, 2 or 3, provided that when a plurality of $R^1$ are present, they may be the same or different, and when a plurality of X are present, they may be the same or different.

The hydrolysable group as X in the formula (1) may, for example, be a halogen atom, an alkoxy group, an acyloxy group, an amido group, an amino group, an aminooxy group, a ketoximate group or a hydride group.

The number of carbon atoms in the hydrolysable group having carbon atoms, among them, is preferably at most 6, particularly preferably at most 4. Preferred X is a lower alkoxy group having at most 4 carbon atoms, and a methoxy group, an ethoxy group, a propoxy group or a propenyloxy group is particularly preferred.

$R^1$ in the formula (1) is preferably an alkyl group having at most 8 carbon atoms, a phenyl group or a fluoroalkyl group. Particularly preferred is, for example, a methyl group, an ethyl group, a propyl group, a butyl group, a hexyl group, a cyclohexyl group or a phenyl group.

<Method for producing modified silicone polymer>

The method for producing a modified silicone polymer of the present invention comprises a step of producing a polyether by the method of the present invention and a step of introducing a hydrolysable silyl group to a molecular terminal of the polyether.

As a method for introducing a hydrolysable silyl group to a molecular terminal of the polyether, a known method may be used. For example, the following methods (i) to (iv) may be used.

[Method (i)]

In the polymerization step (b), a polyether having a hydroxyl group at a terminal is produced, and an olefin group is introduced to the terminal, and then, a hydrosilyl compound represented by the formula (2) is reacted to introduce a hydrolysable silyl group.

$$HSiX_aR^1_{3-a} \qquad (2)$$

In the formula (2), $R^1$, X and a are as defined above.

As a method for introducing an olefin group to the polyether, it is possible to employ, for example, a method of reacting a compound having an olefin group and a functional group reactive with a hydroxy group, to the hydroxy group of the polyether.

[Method (ii)]

In the polymerization step (b), at the time of ring-opening addition polymerization of a monoepoxide to an initiator, an epoxy compound containing an olefin, such as allyl glycidyl ether, is subjected to ring-opening polymerization, to produce an allyl group-modified polyether having an olefin group (such as an allyl group) introduced to a terminal of the polyether, and a hydrosilyl compound represented by the above formula (2) is reacted thereto, to introduce a hydrolysable silyl group.

[Method (iii)]

In the polymerization step (b), a polyether having a hydroxy group at a terminal is produced, and this polyether is reacted with a compound having a polyisocyanate group and a hydrolysable silyl group represented by the above formula (1), to introduce a hydrolysable silyl group.

[Method (iv)]

By the above method (i) or (ii), a polyether having an olefin group introduced to a terminal is obtained, and the olefin group is reacted with a mercapto group (-SH) of a silicon compound represented by the following formula (3), to introduce a hydrolysable silyl group.

$$R^1_{3-a}\text{-}SiX_a\text{-}R^2SH \qquad (3)$$

In the formula (3), $R^1$, X and a are as defined above, and $R^2$ is a bivalent organic group.

<Method for producing urethane prepolymer, and method for producing modified silicone polymer using it>

The method for producing a urethane prepolymer of the present invention comprises a step of producing a polyether by the method of the present invention and a step of reacting the polyether with a polyisocyanate compound to obtain a urethane prepolymer having an isocyanate group at its terminal.

The method for producing a modified silicone polymer of the present invention using the urethane prepolymer comprises a step of producing the urethane prepolymer by the method of the present invention and a step of introducing a hydrolysable silyl group to a molecular terminal of the urethane prepolymer.

The polyisocyanate compound may, for example, be an aromatic polyisocyanate such as naphthalene-1,5-diisocyanate, polyphenylene polymethylene polyisocyanate, 4,4'-diphenylmethane diisocyanate, 2,4-tolylene diisocyanate or 2,6-tolylene diisocyanate; an aralkyl polyisocyanate such as xylylene diisocyanate or tetramethylxylylene diisocyanate; an aliphatic polyisocyanate such as hexamethylene diisocyanate, 2,2,4-trimethyl-hexamethylene diisocyanate or 2,4,4-trimethy-hexamethylene diisocyanate; an alicyclic polyisocyanate such as isophorone diisocyanate or 4,4'-methylene-bis(cyclohexyl isocyanate); or a urethane-modified product, a burette-modified product, an allophanate-modified product, a carbodiimide modified product or an isocyanurate-modified product obtainable from such a polyisocyanate compound.

Among them, one having two isocyanate groups is preferred, and 2,4-tolylene diisocyanate, 2,6-tolylene diisocyanate, hexamethylene diisocyanate or isophorone diisocyanate is preferred.

The polyether and the polyisocyanate compound are reacted in an excessive ratio of isocyanate groups to obtain a urethane prepolymer having an isocyanate group at its terminal. This step can be conducted by using a known method.

As a method for introducing a hydrolysable silyl group to a molecular terminal of a urethane prepolymer having an isocyanate group at its terminal, a known method may be employed. For example, the following method (v) may be employed.

[Method (v)]

To a terminal isocyanate group of a urethane prepolymer, the W group in the silicon compound represented by the following formula (4) is reacted, to introduce a hydrolysable silyl group.

$$R^1_{3-a}\text{-}SiX_a\text{-}R^2W \qquad (4)$$

In the formula (4), $R^1$, X and a are as defined above, and $R^2$ is a bivalent organic group, and W is an active hydrogen-containing group selected from a hydroxy group, a carboxy group, a mercapto group and an amino group (primary or secondary).

By producing a urethane prepolymer or a modified silicone polymer by using a polyether obtained by the method of the present invention, it is possible to obtain a urethane prepolymer or a modified silicone polymer which has the same number average molecular weight as heretofore with the viscosity lowered. It is thereby possible to obtain a modified silicone polymer having a high molecular weight which used to be not suitable for use as the viscosity was too high, with a viscosity suitable for use.

As the modified silicone polymer has the viscosity lowered, the coating properties will be improved. Further, as the molecular weight of the modified silicone polymer is high, the hardened product will be excellent in mechanical properties such as strength, elongation, etc.

Such a modified silicone polymer is suitable particularly for a sealing material.

Further, the urethane prepolymer may be used as an adhesive or a sealing agent without being formed into a modified silicone polymer.

EXAMPLES

Now, the present invention will be described in further detail with reference to Examples, but it should be understood that the present invention is by no means limited to such Examples.

<Measuring methods>

(1) Hydroxy value

Hydroxy groups of a polyol were esterified by a pyridine solution of phthalic anhydride, and the hydroxy value was measured by a titration method using a sodium hydroxide (NaOH) solution (in accordance with JIS K1557 (2007 edition)).

(2) Viscosity

Using an E-type viscometer VISCONIC EHD Model (manufactured by Tokimec., Ltd.), the viscosity was measured in accordance with JIS K1557 using a No. 1 rotor. With respect to the measuring temperature, the viscosity was measured at 25°C unless otherwise specified.

(3) Total unsaturation degree (USV)

Measured by a mercury acetate method in accordance with JIS K1557. (4) Number average molecular weight (Mn) and mass average molecular weight (Mw)

The number average molecular weight (Mn), mass average molecular weight (Mw) and molecular weight distribution (Mw/Mn) of a polyether are molecular weights in terms of polystyrene obtained by measurement by means of gel permeation chromatography (GPC) under the following conditions, using a calibration curve prepared by using standard polystyrene samples having known molecular weights.

[GPC measurement conditions]

Apparatus used: HLC-8220GPC (manufactured by Tosoh Corporation)
Data treatment device: SC-8020 (manufactured by Tosoh Corporation)
Column used: TSG gel G2500H (manufactured by Tosoh Corporation)
Column temperature: 40°C, detector: RI, solvent: tetrahydrofuran, flow rate: 0.6 mL/min.

Concentration of sample: 0.5 mass%, injected amount: 10 μL

Standard samples for preparation of calibration curve: polystyrene ([Easical] PS-2 [Polystyrene Standards], manufactured by Polymer Laboratories)

<Production of DMC catalyst>

(Reference Example 1: Production of DMC catalyst)

Polyol X to be used in this Example is a polyoxypropylene diol having a number average molecular weight (Mn) of 1,000 and a hydroxy value of 112 mgKOH/g, which was produced by a ring-opening addition reaction of propylene oxide (hereinafter referred to as PO) to propylene glycol by means of a potassium hydroxide (KOH) catalyst, followed by purification by a known method.

Firstly, in a 500 mL flask, an aqueous zinc chloride solution comprising 10.2 g of zinc chloride and 10 g of ion-exchanged water, was prepared and stirred at 300 rpm while maintaining the temperature at 40°C. An aqueous solution comprising 4.2 g of potassium hexacyanocobaltate $[K_3Co(CN)_6]$ and 75 g of ion-exchanged water was dropwise added thereto over a period of 30 minutes. After the dropwise addition, stirring was further continued for 30 minutes, and then a mixture comprising 80 g of tert-butyl alcohol (hereinafter referred to simply as TBA), 80 g of ion-exchanged water and 0.6 g of polyol X, was added, followed by stirring at 40°C for 30 minutes and further at 60°C for 60 minutes. The obtained mixture was filtered under pressure (0.25 MPa) by means of a circular filter plate having a diameter of 125 mm and a quantitative filter paper for fine particles (No. 5C, manufactured by ADVANTEC), whereby in 50 minutes, a solid (cake) containing a double metal cyanide complex, was obtained.

Then, the obtained cake was transferred to a flask, and a mixed liquid comprising 36 g of TBA and 84 g of ion-exchanged water, was added, followed by stirring for 30 minutes, whereupon under the same conditions as above, pressure filtration was conducted for 15 minutes to obtain a cake again. The cake was transferred to a flask, and further, a mixed liquid comprising 108 g of TBA and 12 g of ion-exchanged water, was added, followed by stirring for 30 minutes, to obtain a slurry containing a double metal cyanide complex.

To this slurry, 100 g of polyol X was added, followed by drying under reduced pressure at 80°C for 3 hours and further at 115°C for 4 hours, to obtain a slurry of a double metal cyanide complex catalyst having TBA as an organic ligand (slurry catalyst (b1)). The concentration of the double metal cyanide complex catalyst in the slurry catalyst (b1) was 4.1 mass%. In the formula (1), $M^1$ and $M^3$ are Zn, $M^2$ is Co, and L is TBA.

<Initiator>

Initiator (a1): A polyoxypropylene diol having a number average molecular weight (Mn) of 10,000, a weight average molecular weight (Mw) of 9,000 and a hydroxyl value of 11.2 mgKOH/g, which was produced by adding propylene oxide to propylene glycol in the presence of an alkali catalyst, followed by purification, and then, adding propylene oxide in the presence of the slurry catalyst (b1).

Initiator (a2): A polyoxypropylene diol having a number average molecular weight (Mn) of 20,000, a weight average molecular weight (Mw) of 13,700 and a hydroxyl value of 5.6 mgKOH/g, which was produced by adding propylene oxide to propylene glycol in the presence of an alkali catalyst, followed by purification, and then, adding propylene oxide in the presence of the slurry catalyst (b1).

Initiator (a3): EXCENOL 1020, manufactured by Asahi Glass Company, Limited, a polyoxypropylene diol having a number average molecular weight (Mn) of 1,000, a weight average molecular weight (Mw) of 962 and a hydroxyl value of 112 mgKOH/g.

<Production of polyether polyol>

As a pressure-resistant reactor, a stainless steel (JIS-SUS-316) pressure-resistant reactor (capacity: 5L) was used, which is provided with a stirrer having one set of anchor vanes and two sets of 45° inclined 2 blades-paddle vanes and which is further provided with a heating tank to circulate a hot medium around the reactor and with a cooling tube to circulate cooling water inside of the reactor. With respect to the temperature measurement of a reaction liquid, the liquid temperature was measured by a thermometer set at a lower portion inside of the pressure-resistant reactor.

Firstly, into the pressure-resistant reactor, 1,800 g of the initiator (a1), 900 mL (589 g; 16.4 parts by mass) of hexane, and the slurry catalyst (b1) prepared in Reference Example 1, were introduced to form a reaction liquid. The amount of the slurry catalyst (b1) was 30 ppm as an amount calculated as a DMC catalyst. Then, the inside of the pressure-resistant reactor was replaced with nitrogen, and the reaction liquid was then heated with stirring. When the temperature reached 130°C, the heating was stopped, and while continuing the stirring, 180 g (10 parts by mass to 100 parts by mass of the initiator) of PO was supplied into the pressure-resistant reactor and reacted. When PO was supplied into the pressure-resistant reactor (initiation of the initial step), the internal pressure of the pressure-resistant reactor rose once. Then, it was confirmed that the pressure gradually decreased and became the same as the internal pressure of the pressure-resistant reactor immediately before supplying PO (completion of the initial step). Meantime, when the decrease of the internal pressure started, the temperature of the reaction liquid rose once and thereafter gradually decreased.

Here, the proportion of a solvent in Example 1 is a proportion to 100 parts by mass in total of the initiator and the entire PO used for the production of a polyoxypropylene diol. The same applies in the following Examples. Further, the concentration of the slurry catalyst (b1) in Example 1 is a concentration to 100 parts by mass in total of the initiator and the entire PO used for the production of a polyoxypropylene diol. The same applies in the following Examples.

After the completion of the initial step, 1,620 g of PO was supplied into the pressure-resistant reactor at 130°C at a rate of 384 g/hr. When a change in the internal pressure was no longer observed, it was confirmed that the reaction was completed. The organic solvent used for the reaction was removed by evacuation under reduced pressure for one hour under conditions of 130°C and 0.01 MPa (Abs.) by means of a vacuum pump.

With respect to the polyether diol thus obtained, the molecular weight in terms of polystyrene (Mw), molecular weight distribution (Mw/Mn), particle size and total unsaturation degree are shown in Table 1.

TABLE 1

| | | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|---|
| Initial step (a) | Concentration of DMC catalyst | 30ppm | 30ppm | 30ppm | 30ppm | 30ppm | 30ppm | 30ppm | 30ppm |
| | Molecular weight of initiator (number average) | 10000 | 10000 | 20000 | 1000 | 10000 | 10000 | 10000 | 10000 |
| | Molecular weight of initiator (weight average) | 9000 | 9000 | 13700 | 962 | 9000 | 9000 | 9000 | 9000 |
| | Amount of initiator (g) | 1800 | 1800 | 100 | 180 | 1800 | 1800 | 1800 | 1800 |
| | Type of solvent | Hexane | THF | Hexane | Hexane | Nil | THF | MEK | DMSO |
| | Amount of solvent (ml) | 900 | 900 | 2300 | 900 | 0 | 200 | 900 | 900 |
| | Amount of solvent (g) | 589 | 800 | 1504 | 589 | 0 | 178 | 720 | 986 |
| | Concentration of solvent (mass%) | 16.4 | 22.2 | 60.2 | 16.4 | 0.0 | 4.9 | 20.0 | 49.8 |
| | Initial temperature (°C) | 130 | 130 | 130 | 130 | 130 | 130 | 130 | 130 |
| | Cyclic monomer for initial step (PO) (g) | 180 | 180 | 20 | 36 | 180 | 180 | 180 | 180 |
| Polymerization step (b) | PO feed rate (g/Hr) | 384 | 384 | 384 | 384 | 384 | 384 | 384 | 384 |
| | PO feed amount (g) | 1620 | 1620 | 2220 | 3384 | 1620 | 1620 | 1620 | 0 |
| Characteristics of polyol | Weight average molecular weight (in terms of polystyrene) | | 20680 | 19627 | 515280 | 20500 | 20730 | 20510 | 5625 | No polyol was produced due to deactivation of catalyst |
| | Number average molecular weight | | 24816 | 23140 | 695628 | 24800 | 30287 | 30457 | 9624 | |
| | Molecular weight distribution | - | 1.200 | 1.179 | 1.350 | 1.210 | 1.461 | 1.485 | 1.711 | |
| | Viscosity (after removal of solvent) | mPa·s/25°C | 15000 | 17000 | Not measurable | 15000 | 20000 | 20000 | 1800 | |
| | Unsaturation degree | meq/g | 0.006 | 0.006 | Not measurable | 0.006 | 0.006 | 0.006 | 0.017 | |

EP 2 840 103 A1

(Example 2: Production of polyether polyol)

A polyether diol was produced in the same manner as in Example 1 except that the organic solvent was changed to tetrahydrofuran (THF) and the amount was changed to 900 mL (800 g; 22.2 parts by mass). The molecular weight in terms of polystyrene (Mw), molecular weight distribution (Mw/Mn), USV and viscosity of the obtained polyether diol are shown in Table 1.

(Example 3: Production of polyether polyol)

100 g of the initiator (a2), 2,300 mL (1,504 g; 60.2 parts by mass) of hexane, and the slurry catalyst (b1) prepared in Reference Example 1, were introduced to form a reaction liquid. The amount of the slurry catalyst (b1) introduced was 30 ppm. Then, the inside of the pressure-resistant reactor was replaced with nitrogen, and the reaction liquid was then heated with stirring. When the temperature reached 130°C, the heating was stopped, and while continuing the stirring, 20 g (20 parts by mass to 100 parts by mass of the initiator) of PO was supplied into the pressure-resistant reactor and reacted. When PO was supplied into the pressure-resistant reactor (initiation of the initial step), the internal pressure of the pressure-resistant reactor rose once. Then, it was confirmed that it gradually decreased and became the same as the internal pressure of the pressure-resistant reactor immediately before supplying PO (completion of the initial step). Even when the decrease of the internal pressure started, the temperature of the reaction liquid did not rise. After completion of the initial step, 2,220 g of PO was supplied into the pressure-resistant reactor at 130°C at a rate of 384 g/hr. When a change of the internal pressure was no longer observed, it was confirmed that the reaction was completed.
The organic solvent used for the reaction was removed by evacuation under reduced pressure for one hour under conditions of 130°C and 0.01 MPa (Abs.) by means of a vacuum pump.
The molecular weight in terms of polystyrene (Mw) and molecular weight distribution (Mw/Mn), of the polyether diol thus obtained, are shown in Table 1.

(Example 4: Production of polyether polyol)

180 g of the initiator (a3), 900 mL (589 g; 16.4 parts by mass) of hexane, and the slurry catalyst (b1) prepared in Reference Example 1, were introduced to form a reaction liquid. The amount of the slurry catalyst (b1) introduced was 30 ppm. Then, the inside of the pressure-resistant reactor was replaced with nitrogen, and the reaction liquid was then heated with stirring. When the temperature reached 130°C, the heating was stopped, and while continuing the stirring, 36 g (20 parts by mass to 100 parts by mass of the initiator) of PO was supplied into the pressure-resistant reactor and reacted. When PO was supplied into the pressure-resistant reactor (initiation of the initial step), the internal pressure of the pressure-resistant reactor rose once. Then, it was confirmed that it gradually decreased and became the same as the internal pressure of the pressure-resistant reactor immediately before supplying PO (completion of the initial step). Even when the decrease of the internal pressure started, the temperature of the reaction liquid did not rise. After completion of the initial step, 3,384 g of PO was supplied into the pressure-resistant reactor at 130°C at a rate of 384 g/hr. When a change of the internal pressure was no longer observed, it was confirmed that the reaction was completed.
The organic solvent used for the reaction was removed by evacuation under reduced pressure for one hour under conditions of 130°C and 0.01 MPa (Abs.) by means of a vacuum pump.
The molecular weight in terms of polystyrene (Mw), molecular weight distribution (Mw/Mn), USV and viscosity of the polyether diol thus obtained, are shown in Table 1.

(Comparative Example 1: Production of polyether polyol)

A polyether diol was produced in the same manner as in Example 1 except that no organic solvent was used. The molecular weight in terms of polystyrene (Mw), molecular weight distribution (Mw/Mn), USV and viscosity of the obtained polyether diol are shown in Table 1.

(Comparative Example 2: Production of polyether polyol)

A polyether diol was produced in the same manner as in Example 1 except that the organic solvent was changed to THF and the amount was changed to 200 mL (178 g; 4.9 parts by mass). The molecular weight in terms of polystyrene (Mw), molecular weight distribution (Mw/Mn), USV and viscosity of the obtained polyether diol are shown in Table 1.

(Comparative Example 3: Production of polyether polyol)

A polyether diol was produced in the same manner as in Example 1 except that the organic solvent was changed to methyl ethyl ketone (MEK, relative permittivity: 18.51) and the amount was changed to 900 mL (720 g; 20 parts by mass). The molecular weight in terms of polystyrene (Mw), molecular weight distribution (Mw/Mn), USV and viscosity of the obtained polyether diol are shown in Table 1.

(Comparative Example 4: Production of polyether polyol)

The organic solvent was changed to dimethyl sulfoxide (DMSO; relative permittivity: 46.45) and the amount was changed to 900 mL (986 g; 49.8 parts by mass). When PO was supplied into the pressure-resistant reactor (initiation of the initial step), the internal pressure of the pressure-resistant reactor rose once. Thereafter, no reaction took pace, and the catalyst was deactivated.

(Example 4)

[Production of prepolymer with terminal isocyanate group]

Into a 1 L glass reaction vessel provided with stirring vanes, 400 g of the polyether diol obtained in Example 1 is introduced. Further, to the reaction vessel, tolylene diisocyanate (a mixture of 2,4-isomer and 2,6-isomer, containing 80 mass% of 2,4-isomer; trade name: TDI-80, manufactured by Nippon Polyurethane Industry Co., Ltd.) and 4,4'-diphenylmethane diisocyanate (trade name: Millionate MT, manufactured by Nippon Polyurethane Co., Ltd.) are introduced in a molar ratio of 7/3 in such an amount that the isocyanate groups/hydroxyl groups (molar ratio) will be 1.95 to the polyether diol. The inside of the reaction vessel is replaced with nitrogen, and then, while stirring the content at 100 rpm, the reaction vessel is heated to 90°C and maintained as it is at 90°C. During the reaction, every certain period of time, a part of the content is taken out, and the content $z_1$ (mass%) of the isocyanate groups is measured, whereupon the isocyanate reaction rate $z$ (%) to the theoretical isocyanate group content $z_0$ (mass%) is obtained. Upon confirming that the content $z_1$ (mass%) of the isocyanate groups has become at most the theoretical isocyanate group content $z_0$ (0.84 mass%), the reaction is completed to obtain a prepolymer with a terminal isocyanate group. The viscosity of the obtained prepolymer with a terminal isocyanate group is 44,000 mPa·s.

(Example 5)

[Production of modified silicone polymer (a)]

Into a SUS autoclave (internal capacity: 5L (liters)), 3,000 g of the polyether diol obtained in Example 2 is introduced and dehydrated under reduced pressure while maintaining the internal temperature at 110°C. Then, the atmosphere in the reactor is replaced with nitrogen, and while maintaining the internal temperature at 50°C, Nahcem zinc (manufactured by Nippon Kagaku Sangyo Co., Ltd.) as a urethanization catalyst is added in an amount of 50 ppm to the polyether diol, followed by stirring, whereupon 1-isocyanate methylmethyldimethoxysilane (purity: 95%) is introduced so that the ratio (NCO/OH) of the total number of isocyanate groups to the total number of hydroxy groups will be 0.97. Then, the internal temperature is maintained at 80°C for 8 hours to subject the polyether diol and 1-isocyanate methylmethyldimethoxysilane to a urethanization reaction, and by means of FT-IR (Fourier Transform Infrared Spectrometer), it is confirmed that a peak of isocyanate has disappeared. Thereafter, the system is cooled to room temperature to obtain a modified silicone polymer (a) having a methyldimethoxysilyl group as a hydrolysable group at its terminal. The viscosity of the obtained modified silicone polymer is 28,000 mPa·s.

[Production of modified silicone polymer (b)]

Into a SUS autoclave (internal capacity: 5L (liters)), 3,000 g of the polyether diol obtained in Example 2 is introduced and dehydrated under reduced pressure while maintaining the internal temperature at 110°C. Then, the atmosphere in the reactor is replaced with nitrogen, and while maintaining the internal temperature at 50°C, Nahcem zinc (manufactured by Nippon Kagaku Sangyo Co., Ltd.) as a urethanization catalyst is added in an amount of 50 ppm to the polyether diol, followed by stirring, whereupon 3-isocyanate propyltrimethoxysilane (purity: 98%) is introduced so that the ratio (NCO/OH) of the total number of isocyanate groups to the total number of hydroxy groups will be 0.97. Then, the internal temperature is maintained at 80°C for 8 hours to subject the polyether diol and 3-isocyanate propylmethoxysilane to a urethanization reaction, and by means of FT-IR (Fourier Transform Infrared Spectrometer), it is confirmed that a peak of isocyanate has disappeared. Thereafter, the system is cooled to room temperature to obtain a modified silicone polymer (b) having a trimethoxysilyl group as a hydrolysable group at its terminal. The viscosity of the obtained modified silicone polymer (b) is 25,000 mPa·s.

(Example 6)

[Production of modified silicone polymer (c)]

Into a SUS autoclave (internal capacity: 5L (liters)), 3,000 g of the polyether diol obtained in Example 2 is introduced and dehydrated under reduced pressure while maintaining the internal temperature at 110°C. Then, the liquid temperature is adjusted to 50°C, a methanol solution containing sodium methoxide in an amount of 1.05 times in mole to the amount of hydroxy groups in the polyether diol, is added. The liquid temperature is adjusted to 130°C, and methanol is removed under reduced pressure to carry out an alcoholating reaction of the polyether diol. Thereafter, the liquid temperature is adjusted to 80°C, and allyl chloride is added and reacted in an excessive amount to the amount of hydroxy groups of the polyether diol, and unreacted allyl chloride is removed for purification to obtain a polymer having an allyl group at a molecular terminal. Then, in the presence of chloroplatinic acid hexahydrate, dimethoxymethylsilane is added in an amount of 0.6 time in mole to the amount of terminal allyl groups of the obtained polymer, followed by a reaction at 70°C for 5 hours, thereby to obtain a modified silicone polymer (c) having a methyldimethoxysilyl group as a hydrolysable group at its terminal. The viscosity of the obtained modified silicone polymer (c) is 19,000 mPa·s.

(Example 7)

[Production of sealing material]

100 Parts by mass of the modified silicone polymer (b) obtained in Example 5, 40 parts by mass of diisononyl phthalate (DINP, manufactured by Kao Corporation, trade name: Vinycizer 90), 75 parts by mass of colloidal calcium carbonate (manufactured by Shiraishi Kogyo Kaisha, Ltd., trade name: Hakureika CCR), 75 parts by mass of heavy calcium carbonate (manufactured by Shiraishi Kogyo Kaisha, Ltd., trade name: Whiton SB, average particle size: 1.78 $\mu$m), 5 parts by mass of a fatty acid amide-type thixotropy-imparting agent (manufactured by Kusumoto Chemicals, Ltd., trade name: Disparon #6500), 1 part by mass of a benzotriazole-type ultraviolet absorber (manufactured by Ciba Specialty Chemicals, Inc., trade name: Tinuvin 326), 1 part by mass of a hindered phenol-type antioxidant (manufactured by Ciba Specialty Chemicals, Inc., trade name: Irganox 1010), and 2 parts by mass of a tetra-valent organic tin compound (manufactured by Asahi Glass Company, Limited, EXCESTAR C201) are mixed to prepare one component-type modified silicone sealing material. The one component-type modified silicone sealing material thus obtained is excellent in working efficiency.

As Examples 1 to 3 show, the polyethers obtained by using the specific organic solvents in the present invention had low viscosities and narrow molecular weight distributions despite their molecular weights were at least 15,000. On the other hand, in Comparative Example 2 wherein the amount of the organic solvent was not in accordance with the present invention, the viscosity was high, and the molecular weight distribution was broadened, even though the molecular weight was at the same level as in Examples 1 and 2. Further, in Comparative Examples 3 and 4 wherein organic solvents having a relative permittivity outside the range of the present invention were used, it was not possible to obtain desired polyols.

Further, by using a polyol obtainable by the method of the present invention, it is possible to obtain a modified silicone polymer having a low viscosity, and when formed into a sealing material, its viscosity can be made low, whereby the working efficiency will be excellent, and it will be suitable for use as a sealing material.

INDUSTRIAL APPLICABILITY

A polyether obtainable by the method of the present invention is widely useful for applications e.g. as raw material for a polyurethane foam, a urethane prepolymer, etc., raw material for a modified silicone polymer, a surfactant, a lubricant, etc.

The obtained urethane prepolymer is useful as an adhesive, a sealing material, a tackifier or a urethane water-proofing material.

Further, a polyether obtainable by the method of the present invention is useful also as raw material for a thermoplastic polyurethane resin or a thermosetting polyurethane resin.

The modified silicone polymer of the present invention is useful as an adhesive, a sealing material or a tackifier.

The entire disclosure of Japanese Patent Application No. 2012-094727 filed on April 18, 2012 including specification, claims, drawings and summary is incorporated herein by reference in its entirety.

**Claims**

1. A method for producing a polyether having a weight average molecular weight of from 15,000 to 550,000, which comprises subjecting a cyclic monomer which is a ring-opening addition reactive and of which at least a part is a 3- or 4-membered ring-form cyclic ether, to a ring-opening addition reaction to an initiator having at least one active hydrogen atom per molecule in the presence of a double metal cyanide complex catalyst and an organic solvent, wherein the relative permittivity of the organic solvent is at most 18, and the amount of the organic solvent is from 6 to 300 parts by mass per 100 parts by mass in total of the initiator and the cyclic monomer.

2. The method for producing a polyether according to Claim 1, wherein the weight average molecular weight of the polyether is from 15,000 to 500,000.

3. The method for producing a polyether according to Claim 1 or 2, wherein the amount of the organic solvent is from 6 to 100 parts by mass per 100 parts by mass in total of the initiator and the cyclic monomer.

4. The method for producing a polyether according to any one of Claims 1 to 3, wherein the organic solvent is hexane or tetrahydrofuran.

5. The method for producing a polyether according to any one of Claims 1 to 4, wherein the molecular weight distribution (Mw/Mn) of the polyether is from 1.01 to 1.60.

6. The method for producing a polyether according to any one of Claims 1 to 5, wherein the entire amount of the cyclic monomer is the cyclic ether.

7. The method for producing a polyether according to any one of Claims 1 to 6, wherein the cyclic ether is an alkylene oxide having 2 or 3 carbon atoms.

8. The method for producing a polyether according to any one of Claims 1 to 7, wherein the initiator is an adduct obtained by subjecting the cyclic monomer to a ring-opening addition reaction to a monohydric or polyhydric alcohol.

9. The method for producing a polyether according to Claim 8, wherein the initiator is the adduct having from 1 to 4 hydroxy groups and a number average molecular weight of at least 600.

10. The method for producing a polyether according to any one of Claims 1 to 9, wherein the difference in weight average molecular weight between the initiator and the polyether obtained by using it, is at least 5,000.

11. A modified silicone polymer obtainable by introducing a silyl group having a hydrolysable group to the polyether obtained by the method as defined in any one of Claims 1 to 10.

## INTERNATIONAL SEARCH REPORT

| | International application No. |
|---|---|
| | PCT/JP2013/060984 |

| A. CLASSIFICATION OF SUBJECT MATTER |
|---|
| C08G65/10(2006.01)i, C08G65/336(2006.01)i |

According to International Patent Classification (IPC) or to both national classification and IPC

| B. FIELDS SEARCHED |
|---|
| Minimum documentation searched (classification system followed by classification symbols) |
| C08G65/00-65/48 |

Documentation searched other than minimum documentation to the extent that such documents are included in the fields searched

| Jitsuyo Shinan Koho | 1922–1996 | Jitsuyo Shinan Toroku Koho | 1996–2013 |
|---|---|---|---|
| Kokai Jitsuyo Shinan Koho | 1971–2013 | Toroku Jitsuyo Shinan Koho | 1994–2013 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>A | JP 2002-543228 A (Bayer AG.),<br>17 December 2002 (17.12.2002),<br>claims 1 to 8; paragraph [0016]<br>& US 6617419 B1      & WO 2000/064963 A1<br>& DE 19918727 A      & AU 3819600 A<br>& BR 10002 A      & CZ 20013761 A<br>& HU 200782 A      & CA 2367670 A<br>& PL 351384 A      & ID 30542 A<br>& AT 273339 T      & ES 2226804 T<br>& PT 1173498 E      & HK 1046147 A<br>& CN 1348476 A      & RU 2242485 C<br>& MX PA0101073 | 1-10<br>11 |
| X<br>A | JP 2011-127007 A (Cemedine Co., Ltd.),<br>30 June 2011 (30.06.2011),<br>claim 1; paragraphs [0035] to [0036]<br>(Family: none) | 11<br>1-10 |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 03 July, 2013 (03.07.13) | 16 July, 2013 (16.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/060984

C (Continuation).   DOCUMENTS CONSIDERED TO BE RELEVANT

| Category* | Citation of document, with indication, where appropriate, of the relevant passages | Relevant to claim No. |
|---|---|---|
| A | JP 03-195727 A  (Asahi Glass Co., Ltd.), 27 August 1991 (27.08.1991), claims 1 to 4 (Family: none) | 1-11 |
| A | JP 03-265627 A  (Asahi Glass Co., Ltd.), 26 November 1991 (26.11.1991), page 2, lower left column, lines 8 to 19 (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3829505 A
- JP 2946580 B
- JP 2003342361 A
- JP 2012094727 A

**Non-patent literature cited in the description**

- Kagaku Binran. Chemical Society of Japan, 1-770, 777